Europäisches Patentamt

European Patent Office

Office européen des brevets

(11) Publication number: **0 314 603 B1**

## (12) EUROPEAN PATENT SPECIFICATION

(45) Date of publication of patent specification: **16.09.92**　(51) Int. Cl.⁵: **A47J 37/04**, A21B 5/03

(21) Application number: **88500103.2**

(22) Date of filing: **28.10.88**

(54) Machine for shaping and cooking foodstuffs.

(30) Priority: **29.10.87 ES 8703091**

(43) Date of publication of application:
**03.05.89 Bulletin 89/18**

(45) Publication of the grant of the patent:
**16.09.92 Bulletin 92/38**

(84) Designated Contracting States:
**AT BE CH DE FR GB GR IT LI LU NL SE**

(56) References cited:
**FR-A- 2 158 218　　NL-A- 7 304 212**
**US-A- 2 899 914　　US-A- 3 215 062**
**US-A- 3 718 487　　US-A- 3 753 737**

(73) Proprietor: **Badia Campo, Luis**
**Desengano 94**
**Huesca(ES)**

(72) Inventor: **Badia Campo, Luis**
**Desengano 94**
**Huesca(ES)**

(74) Representative: **Gomez-Acebo y Pombo, José Miguel**
**c/o CLARKE, MODET & Co., Avda. de los Encuartes, 4**
**E-28760 Tres Cantos, Madrid(ES)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns a machine for shaping and cooking food products, and more specifically food products comprising a mixture of two or more components, which mixture must be shaped to obtain a given configuration, at the sane time as the said mixture is cooked, to combine the different components.

More particularly, although not exclusively, the machine in the invention enables the shaping and cooking of omelets of the so-called "Spanish" type, which comprise portions of a reduced thickness of fried potatoes and beaten egg.

The shaping and cooking of this type of omelet takes place in frying pans, it being necessary to toss the mixture, to achieve a good shape and, especially, so that all the egg sets and is partially or completely fried, combining the potatoes.

With the traditional process, the omelets have to be formed one by one, which prevents them being made on an industrial scale, due to the high amount of labour which would be required.

The purpose of this invention is to develop a machine which enables omelets of the type described to be made quickly without practically any labour in the shaping and cooking operations, the manufacturing process thus being industrialisable.

The machine in the invention is designed to shape and cook omelets, starting from the mixture formed by the previously fried potatoes and beaten eggs.

Dutch patent no. 7304212 comprises an installation for the preparation of crepes consisting of a series of frying pans or containers driven by pushers to move these, and, as required because we are dealing with the preparation of crepes, the fliping-over of some frying pans over others, for which the installation includes two mechanisms driven by independent engines and incorporating a connecting-rod assembly that allows a pan to flip-over 160°.

This system is inconvenient as it requires a perfect synchronization of the movements, which is practically impossible given the use of independent engines and reduction unit transmission systems which are not too precise (pulleys-belts).

Furthermore, since the flipping-over of one pan over another is not 180°, one has to rely on that the inertia of the flipping will be sufficient to transfer the product from one pan to the other, with the possibility of the contents of one pan falling outside the other (receiving) pan.

The present invention solves this inconvenience, providing a machine that includes a series of containers, preferably shaped like frying pans, for the shaping and cooking of products. These containers distributed in two symmetric parallel rows, the containers in both rows being transversally aligned in pairs. Furthermore, the containers move the length of the said rows, for which the machine has dragging means for these containers throughout the length of the rows, the containers on both sides always being symmetric, thus ensuring transversal alignment in pairs.

The machine also includes means for tipping the containers by displacing them from their normal position to an inverted position on the opposite container and vice versa. The containers describe a circular path around a central shaft which is parallel and equidistant to both rows of containers.

The machine is also equipped with control means for starting and stopping the drag means of the containers, and also for activating and disactivating the tipping means.

Of each pair of transversally aligned containers, one in each row, only one holds the mixture to be shaped and cooked.

To shape the omelets, the mixture of fried potatoes and beaten eggs is placed successively in the containers in one row, which move over heating means which shape and cook the product. When the containers reach a certain point, the tipping means start to operate through which the mixture being shaped is transferred to the opposite frying pan or container, belonging to the other row. From this point, the containers in the second row are the ones which transport the mixture and run along the heating means, while the containers in the first row pass empty.

The drag means of the containers comprise a continuous chain mounted between cogwheels for dragging and changing direction. This chain, at least in the forward stretch, runs horizontally. Equidistant supports are fixed to the said chain, to each of which, according to a shaft situated in the plane of symmetry of the two rows of containers, two arms are hinged, in a perpendicular direction to the said plane of symmetry, one on either side of the chain. These arms are coplanar, at least in their end portion, and have two containers fixed at their free end.

To assist the movement of the containers on either side of the chain, two tracks are provided parallel to the said chain, in which the holder arms of the containers rest, through skids or bearings mounted on these arms.

The tipping means of the containers comprise a moving arched fork which runs below the drag chain in a point of its path, in the transversal direction of the said chain. The fork is fixed by the end of its central branch to a shaft parallel to the rotating axis of the arms. This shaft is driven by a pinion and rack device, through a pneumatic or hydraulic dual-effect cylinder.

On activating the cylinder in one direction or another, the fork mentioned can move according to a circular path described around the shaft to which it is fixed. The displacement of the fork occurs between two limit positions, one which we shall call retraction, in which the fork is placed under the chain, with the end of the side branches placed at the height of the arms of the containers on one of the sides, and the other which we shall call end or tipping, in which the fork is partially placed above the chain, with the end of the side branches placed at the height of the arms of the containers on the other side.

The fork also has two pneumatic or hydraulic cylinders mounted in the end of its side branches, which face and are perpendicular to the arms of the containers, in the aforementioned limit positions of the fork, to housings existing in the said arms, into which the pistons of the cylinders fit, in their extracted position.

The control means of the machine in the invention include a first microswitch, placed so that on being operated, it stops the drag chain, two of the transversally aligned arms being placed above the tipping means. This microswitch stops the drive motor of the chain, which is connected to the drive plate, at the same time as it activates an electrobrake linked to the said motor, to make the chain stop instantaneously. This first microswitch activates an electrovalve, through a timer; this electrovalve drives one of the cylinders mounted in the ends of the arms of the fork, precisely the cylinder which is opposite the housing of the arm whose container or frying pan is empty at that moment. This microswitch also makes the cylinder which drives the fork move in one direction. In this situation, the piston of the activated cylinder of the fork arm goes into the housing of the respective arm. Then, when the cylinder which controls the fork is operated, it makes the latter turn 180°, dragging the arm and the empty container, which is placed in an inverted position over the opposite container which carries the product to be shaped. When the displaced arm reaches its maximum outer tipping position, it acts on a second microswitch, which activates the second cylinder of the fork arm, its piston entering the housing of the arm holding the frying pan which carries the product. At the same time, the cylinder which drives the fork is fed in the opposite direction. In these conditions, the piston of the second cylinder will go into the housing of the arm which carries the frying pan with the product to be cooked and then makes the fork return, thereby shifting the two arms, with the containers side by side, until the original starting position.

When the two frying pans together turn 180°, the arm of the second frying pan, which is now in an inverted position, acts on a third microswitch which withdraws the cylinder piston of the fork arms first operated; at the same time, the cylinder is again activated which drives the fork to return the second frying pan to its original position, which returns empty after transferring the product contained in the first frying pan. When the arm of this second frying pan reaches its initial rest position, it acts on a fourth microswitch which brings back the respective cylinder of the fork branch, at the same time as it inverts the action of the cylinder which drives this fork, returning it to its original rest position, and leaving the second frying pan in its normal position. When the fork returns to this withdrawn position, a last microswitch is operated which starts the chain working again, which moves forward until the two arms and following containers aligned transversally remain on the tipping means again.

The heating means will be located under the rows of containers, at least in the areas which these transport the products to be cooked.

Each of the aforementioned arms can hold two frying pans in their free ends, thereby duplicating the production of the machine.

The set-up and working of the machine in the invention will be understood better with the following description, made with reference to the attached drawings, in which a possible form of embodiment is shown diagrammatically, by way of unlimiting example.

In the drawings :

Figure 1 is a partial plan view of the machine constructed in accordance with the invention.

Figure 2 is a side elevation of the machine in figure 1.

Figure 3 is a diagrammatic cross-section of the machine in figure 1, showing the tipping means of the containers.

Figure 4 shows diagrammatically the different positions of the containers and their carrier arms.

Figures 5, 6 and 7 are, respectively, a side elevation, front elevation and plan view of the fork which constitutes the tipping means.

Figures 8 and 9 are a side elevation and plan view of two of the transversally aligned containers with their carrier arms and central support to which these arms are hinged.

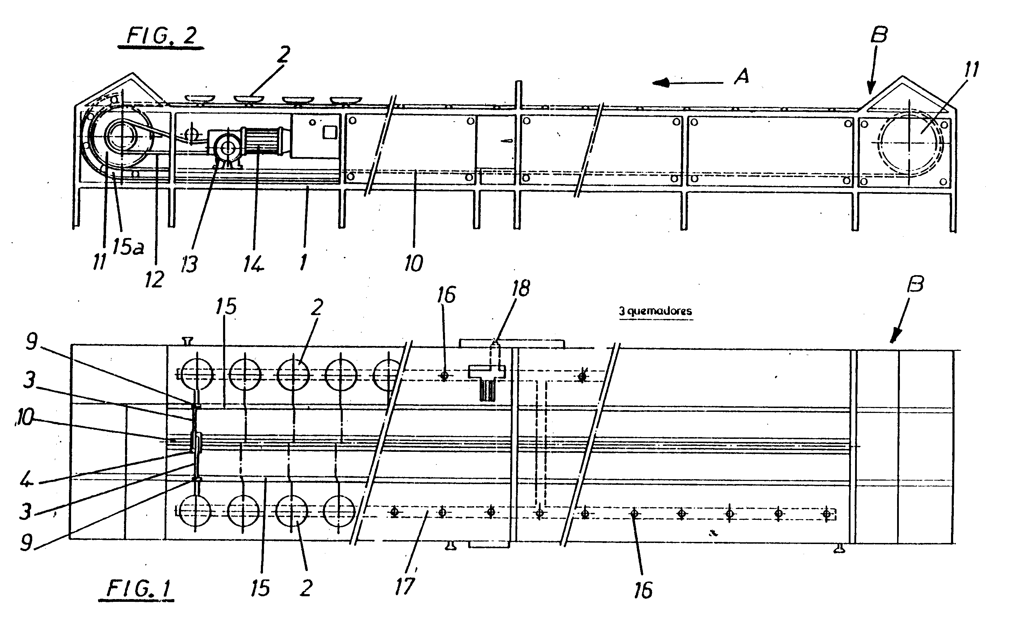

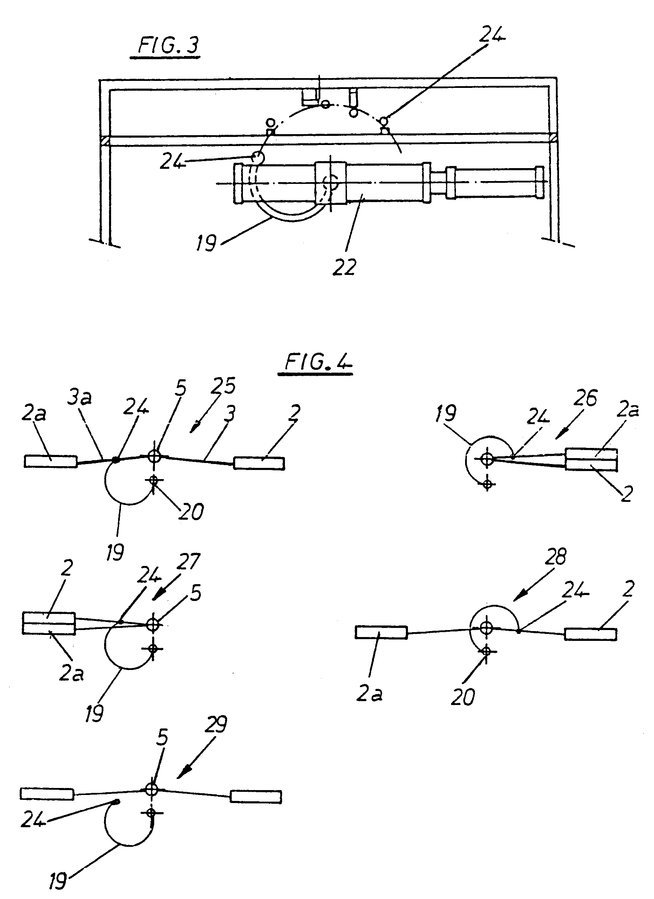

The machine illustrated in the drawings, as can be seen in figures 1 and 2, comprises a structure or frame 1, over which a series of containers or frying pans 2 are placed, distributed in two parallel symmetric rows, so that the containers of both rows are transversally aligned in pairs.

The containers 2 are fixed at the end of arms 3 which are aligned at least in their end portion.

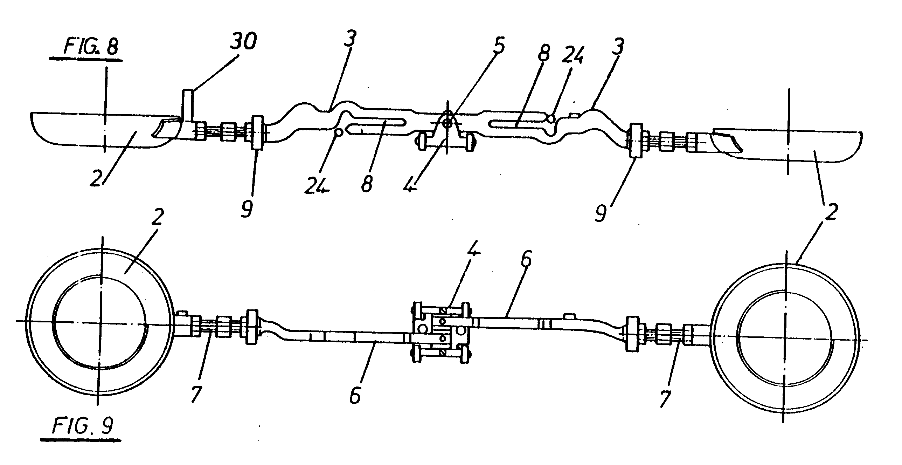

As can be seen in figures 8 and 9, the arms 3 of each pair of transversally aligned containers are hinged at their end adjacent to a central support 4, through a shaft 5 placed in the plane of symmetry of the rows of containers. In the form of embodiment illustrated in the drawings, the arms 3 have a stretch 6 adjacent to the support 4, which is out of line with the end portions 7 of the said arms.

The arms 3 also have two longitudinal grooves 8 passing through both sides and leading to the outside, at the bottom in the arms of one of the sides and at the top in the opposite arm.

Finally, the arms 3 have bearings 9 mounted for resting on the structure or frame 1.

The two rows of containers 2 move along them, for example in the direction of arrow A in figure 2, always maintaining the transversal alignment by pairs of containers. This displacement is achieved through a drag chain 10 which is mounted between plates 11, one of which is connected through a transmission 12, to an electric drive motor 13, to which an electrobrake 14 is linked.

Each pair of arms 3 is fixed to the chain 10 through the central support 4. Furthermore, the arms 3 rest through the bearings 9 in longitudinal tracks 15 which run on both sides of the chain 10. These tracks are provided throughout the length of the forward stretch of the chain. In the change of direction areas and in the return stretch of the chain, the tracks have bearings 9 on the outside, as seen in figure 2, where these portions of track are indicated with reference 15a.

Under the rows of containers 2, burners 16 are placed for gaseous fuels which are supplied through pipes 17, provided with a gas inlet 18.

In area B which corresponds to the start of the forward stretch of the chain, the product to be cooked is poured into the containers 2 of one of the rows, reaching a point in which, once the motor 13 has stopped, and with the advance of the chain 10, the opposite empty container, together with its arm 3, turns round the hinge pin 5 to the support 4, the empty container remaining in an inverted position over the full container. The two superposed containers then turn in the opposite direction, until they occupy the position of the container which was displaced, originally empty and which will receive the product to be cooked. The upper container then returns to its original position and continues its journey, now empty. In this way, the containers of one of the rows move with the product to be cooked from the start of the installation to a point where the said product is transferred to the containers on the other side.

To achieve this transfer effect of the product to be cooked, the machine is provided with tipping means, which comprise a fork 19 which is arranged in a transversal direction in the frame 1; under the advance stretch of the chain 10, this fork is placed towards the central part of the frame 1.

The fork 19 is fixed, through the end 20 of the central branch 21 of the fork, through a toothed hole, in a grooved shaft which is driven through a rack, by means of the pneumatic cylinder 22, housed in the frame 1 between the advance and return stretches of the chain 10. The cylinder 22 is dual-effect and on being activated in either direction causes the displacement of the arm 19, which describes a circular path, between two limit positions, one of retraction, illustrated in fig. 3, in which the fork is placed under the advance stretch of the chain, and the other outer tipping stretch, in which it protrudes partially above the said chain.

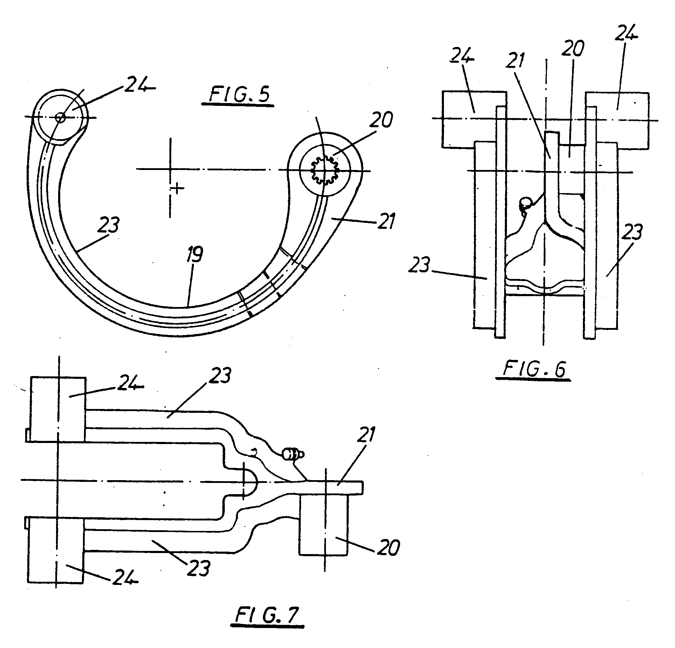

Returning to figures 5 to 7, the side branches 23 of the fork have two pneumatic cylinders 24 mounted in their ends, whose piston can move in a parallel direction to the shaft in which the fork is mounted.

With the layout disclosed, the cylinders 24 mounted in the end of the side branches 23 of the fork, when the latter is in its withdrawn position, illustrated in figure 3, are placed slightly under the arms 3, opposite the lower opening of the groove 8, while on activating the cylinder 22 causing the displacement of the fork 19, the cylinders 24 face the upper opening of the groove 8 of the opposite arm, as shown in figure 8. On activating one of the cylinders 24, in the withdrawn position of the fork 19, its piston goes through the lower opening of the groove 8, to continue later the whole length of the said groove, when the fork is displaced. On reaching the maximum displacement, when the other piston 24 faces the upper opening of the groove 8 of the opposite arm, on removing the piston, this goes into the groove 8, throughout which it moves, on inverting the displacement of the fork 19 to return to its original withdrawn position.

The way the machine works is explained below, with reference to figure 4.

In the diagram shown in figure 25, the containers in one row holding the product to be cooked are marked with number 2, while the containers marked with number 2a are empty. Each time a pair of containers 2-2a passes above the tipping means, defined by the fork 19, the drag chain stops, by the action of a microswitch which activates an electrovalve at the same time, through a timer, which operates an electrovalve which operates one of the cylinders 24 mounted in the end of the side branches of the fork 19. At the same time, the cylinder 22 is activated, in charge of driving the fork 19. With these actions, when the piston emerges from the respective cylinder 24, it goes through the lower opening of the groove 8 of arm 3a; this arm and the empty container 2a are displaced until they reach the position marked with reference number 26, in which the container 2a is superposed, in an inverted position, over container 2. At this moment, a second microswitch works which activates the other cylinder 24, making the respective cylinder leave and which goes in through the upper opening of the groove 8 of the arm 3. At the same time, the cylinder 22 is activated in the opposite direction, whereby the fork 19 returns to the withdrawn position shown in figure 4 and marked with reference number 27. From position 26 to 27 both containers 2-2a return to the original position of container 2a, whereby the product contained in vessel 2 passes to container 2a. On reaching this position, marked with reference number 27, a third micro operates, which disactivates the first cylinder 24 in position 25 and again activates cylinder 22, the fork then passes again from its withdrawn position to its extraction or tipping position, marked with reference number 28. When container 2 returns to its original position, it does so empty, the product remaining in container 2a. In the position marked with reference number 28, a fourth micro is operated which causes the retraction of the second cylinder 24, and also the actuation of cylinder 22 in the opposite direction, which returns fork 19 to its original position, as shown with reference 29. When the fork 19 reaches this maximum withdrawal position, it acts on a last micro which again starts the motor 14 and the drag chain 10 working, until a new pair of containers is placed on the tipping device defined by the fork 19.

Consequently, from the beginning of the installation to the area where the tipping means are placed, it will be the containers in one row which carry the product to be cooked, while from the said means, the product will be placed in the containers in the other row.

The burners 16 will be placed throughout the length of the areas in which the vessels containing the product to be cooked run. These burners can also be placed under the empty containers, in a stretch located immediately below the tipping means, from which they will receive the product to be cooked, in order to preheat them.

To ensure the position of the chain 10, upper and lower guides can be provided, which prevent them accidentally coming out or being displaced.

The products to be cooked can be arranged from the start of the installation, in alternating containers, one in each row; tipping can also then be arranged alternatingly, from both rows.

The micros which control the different movements can be replaced by limit sensors of the cylinders.

As can be seen in figures 8 and 9, the end stretch 7 of the arms 3 holding the containers, are adjustable in length, in order to obtain the exact position of the containers 2.

As can also be seen in figure 8, the containers of one of the rows can have a prong 30, through which the correct superposed and opposing position of the containers 2 is ensured, illustrated in figure 4 with reference numbers 26 and 27.

Also, understandably, the chain 10 and the rows of containers 2, could describe a different circle. For example, both the drag chain and the containers could describe a circular path.

After sufficiently disclosing the nature of the invention together with the way of executing it in practice, it should be stated that the foregoing layout, illustrated in the attached drawings, are liable to modification in detail, provided they do not alter its basic principle.

## Claims

1. A machine for shaping and cooking foodstuffs specially food products made up of a mixture of two or more components that include a series of containers (22) for shaping and cooking the products, which are distributed in two symmetric parallel rows, the containers in both rows being transversally aligned in pairs, and which move along the said rows; drag means for the containers the length of the rows, maintaining the symmetry, and hence the transversal alignment of the containers in both rows in pairs; means for tipping the containers by displacing them from their rest position to an inverted position over the opposite container, and vice versa, describing a circular path around a central shaft parallel to and equidistant from the rows of containers; control means for starting and stopping the drag means and also for activating and disactivating the tipping - means; and means for heating the containers; only one of each pair of containers holds the mixture to be shaped and cooked; characterized in that the drag means comprise an endless chain (10) mounted between cogwheels (11) for dragging and changing directions, mentioned chain (10) running at least in a forward stretch (A), in a horizontal plane; equidistant supports (4) are fixed to the said chain (10), to each of which, according to a shaft (5) placed in the plane of a symmetry of the two rows of containers (2), two arms (3) are hinged, directed in a perpendicular direction to the said plane of symmetry, one towards each side of the said chain (10), said arms (3) being coplanar, at least in their end portion, and at their free end holding the two containers (2).

2. A machine according to claim 1, characterized in that the drag chain (10) is located in the plane of symmetryof the two rows of containers (2).

3. A machine according to claims 1 and 2, characterized in that on both sides of the chain (10) two tracks (15) run, parallel to the said chain (10), in which the arms (3) carrying the containers (2) rest, through bearings (9) mounted in the said arms (3).

4. A machine according to claim 1, characterized in that the said control means include a first micro which makes the drag chain (10) stop, said micro being operated consecutively by the different arms (3) carrying the containers (2), when the chain (10) moves forward, the micro making the motor (13) connected to the drive plate (11) stop, at the same time as it activates an electronic brake (14) to the said motor.

5. A machine according to claim 1, characterized in that the tipping means comprise a moving arched fork (19), which runs under the advance stretch of the drag chain (10), in a point of its path, in a transversal direction, and is fixed by the end of its central branch to a shaft parallel to the rotation axis (5) of the arms (3), said shaft being driven through a rack by means of a pneumatic or hydraulic cylinder (22); the said fork (19) shifts according to a circular path described around the said shaft, between two limit positions, one of retraction, in which the fork (19) is placed under the chain (10), with the end of the side branches placed slightly under the arms (3) of the container (2) of one of the sides, and the other tipping end, in which the fork (19) is partially placed over the chain (10), with the end of the side branches placed at the height of the arms (3) of the containers (2) on the opposite side; taking to the said side branches of the fork (19) mounted in their free end, two pneumatic or hydraulic cylinders (22)1 perpendicular to the arms (3) of the containers (2) and in the said limit positions, facing the housings existing in the said arms (3), into which the cylinder pistons (24) go in their extracted position.

6. A machine according to claim 4, characterized in that the said housings of the arms (3) carrying the containers (2) consist of longitudinal grooves, one in each arm (3), placed between the hinge point of the said arms (3) to the support (4) fixed to the drag chain (10) and the support bearings (9) of the said arms (3), said grooves (8) passing through the side surfaces of the arms (3) and coming out through the nearest end to the said bearings (9), at the bottom through the groove (8) of the arm (3) adjacent to the withdrawn position of the fork (19), and at the top through the groove (8) of the arm (3) adjacent to the outer tipping position of the said fork.

7. A machine according to claims 1 and 4, characterized in that the first micro quoted also activates consecutively, through a timer, an electrovalve which opens the supply of the cylinder (22) which is mounted in one of the side branches of the fork (19), the position entering the groove (8) of the arm (3) which holds the adjacent container (2), and also the supply in one direction of the cylinder (22), which drives the fork (19), causing the circular displacement of the said arm (3) until the container (2) joined to its end is placed in an inverted position over the opposite container (2), the first container (2) being empty, while the second holds the product to be cooked.

8. A machine according to claims 4 and 7, characterized in that the control means also include a second micro, which is driven by the displaced arm (3) of the first empty container (2) in its outer tipping limit position and makes the other piston of the side branches of the fork (19) come out and go into the groove (8) of the arm (3) in the second container (2) holding the product to be cooked, at the same time as it feeds the cylinder (22) in the opposite direction which drives the fork (19), causing the circular displacement of the arms (3), together with the superposed containers (2), until the initial starting position of the arm (3) holding the empty container (2), transferring the contents of the second vessel to the first.

9. A machine according to claims 4, 7 and 8, characterized in that the control means also include a third micro which is driven at the end of the circular displacement of the two arms (3), which causes the retraction of the cylinder (22) of the side branches of the fork (19) activated in the first place, as well as the feed in the first direction quoted of the cylinder (22) which drives the fork (19), dragging the arm (3) of the second container (2) to its initial rest position.

10. A machine according to claims 4, 7, 8 and 9, characterized in that the control means also include a fourth micro, which is activated by the arm (3) of the second container (2) on returning to its initial rest position, which micro withdraws the cylinder (22) from the arms of the fork (19) activated in the second place, at the same time inverting the displacement of the cylinder (22) which drives the fork (19); this returns to its withdrawn limit position, in which it activates a fifth micro which starts up the drag motor (13) of the chain (10), which advances until the following aligned arms (3) reach the position of the first micro quoted.

11. A machine according to claim 1, characterized in that the control means comprise sensors driven by the inlets holding the containers and the pistons of the different cylinders (22).

**Patentansprüche**

1. Eine Maschine für die Formung und Zubereitung von Nahrung, insbesondere Nahrungsmittelprodukte, die sich aus einer Mischung von zwei oder mehr Zutaten zusammensetzen; bestehend aus einer Reihe von Gefässen (22) für die Formung und Zubereitung der Produkte. Diese Gefässe sind in zwei symmetrischen parallelen Reihen angeordnet und befinden sich in beiden Reihen quer zueinander paarweise gruppiert, die sich entlang diesen Reihen bewegen; entlang diesen beiden Reihen befindet sich eine Zugvorrichtung für die Gefässe, die die Symmetrie einhält, daher die transversale paarweise Anordnung der Gefässe in beiden Reihen; Vorrichtung für das Kippen der Gefässe durch Aushebung derselben aus ihrer Ausgangsstellung in eine umgekehrte Stellung über dem gegenüberliegenden Gefäss und umgekehrt, durch Beschreibung eines Kreises um eine Zentralachse, die parallel zu und gleichweit von den Gefässreihen liegt; Kontrollvorrichtungen für An-und Ausschaltung der Zugvorrichtung und ebenfalls für das An- und Ausschalten der Kippvorrichtung; Vorrichtung für die Erhitzung der Gefässe; nur eins von jedem Gefässpaar enthält die zu formende und zuzubereitende Mischung; die Zugvorrichtung besteht aus einer umlaufenden Kette (10), die über Zahnräder (11) läuft für den Zug und den Richtungswechsel. Die vorgenannte Kette (10) läuft in Vorwärtsrichtung (A) auf horizontaler Ebene; gleichweit liegende Halter (4) sind an der Kette (10) befestigt, an die an jedem einzelnen, mittels einer Achse (5), die auf einer Symmetrieebene beider Gefässreihen (2) liegt, zwei Arme (3) angeflanscht sind, die senkrecht zu der genannten Symmetrieebene geführt werden, je ein Arm zu beiden Seiten der Kette (10). Die vorgenannten Arme (3), die zumindest an ihrem Endstück komplanar sind, halten an ihrem freien Ende die beiden Gefässe (2).

2. Eine Maschine, gemäss der Geltendmachung 1, die sich dadurch auszeichnet, dass sich die Zugkette (10) auf der Symmetrieebene der beiden Gefässreihen (2) befindet.

3. Eine Maschine, die gemäss Geltendmachung 1 und 2 sich dadurch auszeichnet, dass sich zu beiden Seiten der Kette (10) parallel zu dieser zwei Laufschienen (15) befinden, in denen die Arme (3) ruhen, die die Gefässe (2) mittels in den genannten Armen (3) montierte Lager (9) tragen.

4. Eine Maschine gemäss Geltendmachung 1, die sich dadurch auszeichnet, dass die genannte Kontrollvorrichtung einen ersten Mikroschalter beinhaltet, der die Zugkette (10) stoppt. Dieser Mikroschalter wird nacheinander durch verschiedene Arme (3), die die Gefässe (2) tragen, betätigt, wenn sich die Kette (10) vorwärts bewegt. Der Mikro stoppt den Motor (13), der an die Antriebsplatte (11) angeschlossen ist und betätigt gleichzeitig eine Elektronikbremse (14) des genannten Motors.

5. Eine Maschine gemäss Geltendmachung 1, die sich dadurch auszeichnet, dass die Kippvorrichtung eine bewegliche gebogene Gabel (19) beinhaltet, die unter dem Vorwärtsabschnitt der Zugkette (10) verläuft und an einem Punkt ihres Verlaufs in Querrichtung. Diese Gabel ist am Ende ihres Mittelzinken an eine zu der Rotationsachse (5) der Arme (3) verlaufende Achse befestigt. Diese Achse wird durch einen Rack mittels eines pneumatischen oder hydraulischen Zylinders (22) angetrieben; diese Gabel (19) bewegt sich gemäss der Beschreibung eines Kreises um die vorgenannte Achse, zwischen zwei Endpositionen, eine für den Rückzug, in dem die Gabel (19) unter die Kette (10) befördert wird, mit dem Ende der Seitenzinken leicht unter die Arme (3) der Gefässe (2) auf einer der Seiten plaziert, und die andere Endposition für das Kippen, in der die Gabel (19) teilweise über die Kette (10) situiert wird, mit dem Ende der Seitenzinken auf der Höhe der Arme (3) der Gefässe (2) auf der gegenüberliegenden Seite plaziert; an den freien Enden der genannten Seitenzinken der Gabel (19) befinden sich zwei penumatische oder hydraulische Zylinder (22), senkrecht zu den Armen (3) der Gefässe (2) und in den genannten Endpositionen, gegenüber dem Gehäuse, dass sich in den genannten Armen (3) befindet, in das die Zylinderkolben (24) in ihrer ausgezogenen Position gehen.

6. Eine Maschine gemäss der Geltendmachung 4, die sich dadurch auszeichnet, dass das genannte Gehäuse der Arme (3), die die Gefässe (2) tragen, aus einer Längsrinne in jedem Arm (3) bestehen, zwischen dem Flanschpunkt des genannten Arms (3) an den Halter (4), der an der Zugkette (10) befestigt ist und den Stützlagern (9) dieser Arme (3). Diese Längsrinnen (8) verlaufen durch die Seitenoberfläche der Arme (3) und kommen am nahesten Ende zu den genannten Lagern (9) heraus, unten durch die Längsrinne (8) des Arms (3) neben der Rückzugsposition der Gabel (19) und oben durch die Längsrinne (8) des Arms (3) neben der äusseren Kippstellung der genannten Gabel.

7. Eine Maschine gemäss Geltendmachungen 1 und 4, die sich dadurch auszeichnet, dass der angeführte Erstmikroschalter auch nacheinander durch einen Programmierer ein Elektroventil betätigt, dass die Versorgung des Zylinders (22) öffnet, der an einer der Seitenzinken der Gabel (19) montiert ist, sowie die in die Längsrinne (8) eintretende Position des Arms (3), der das danebenliegende Gefäss (2) hält, und ebenfalls die Versorgung in eine Richtung des Zylinders (22), der die Gabel (19) betätigt, und die Kreisbewegung des genannten Arms (3) bewirkt, bis sich das an seinem Ende befestigte Gefäss (2) in umgekehrter Stellung über dem ihm gegenüber liegenden Gefäss (2) befindet. Das erste Gefäss (2) ist leer und das zweite enthält das zuzubereitende Produkt.

8. Eine Maschine gemäss der Geltendmachungen 4 und 7, die sich dadurch auszeichnet, dass die Kontrollvorrichtung ebenfalls einen zweiten Mikroschalter beinhaltet, der durch den in seine äussere Kippendposition verlagerten Arm (3) des ersten leeren Gefässes (2) betätigt wird, und den anderen Kolben der Seitenzinken der Gabel (19) herausholt und in die Längsrinne (8) des Armes (3) im zweiten Gefäss (2), dass das zuzubereitende Produkt enthält, führt. Gleichzeitig speist er den Zylinder (22) der anderen Richtung, der die Gabel (19) zur Beschreibung einer Kreisbewegung des Arms (3) antreibt, zusammen mit dem auf den Kopf gestellten Gefäss (2) bis zur anfänglichen Ausgangsposition des Arms (3), der das leere Gefäss (2) hält. So wird der Inhalt des zweiten Gefässes in das erste befördert.

9. eine Maschine gemäss Geltendmachungen 4,7 und 8, die sich dadurch auszeichnet, dass die Kontrollvorrichtung ebenfalls einen dritten Mikroschalter, der am Ende der Kreisverlagerung der beiden Arme (3) betätigt wird und den Zurückzug des Zylinders (22) der Seitenzinken der Gabel (19), der zuerst betätigt wurde, bewirkt, sowie die Speisung in die erstgenannte Richtung des Zylinders (22), der die Gabel (19) betätigt, indem er den Arm (3) des zweiten Gefässes (2) in seine anfängliche Ausgangsstellung bringt.

10. Eine Maschine gemäss Geltendmachungen 4,7, 8 und 9, die sich dadurch kennzeichnet, dass die Kontrollvorrichtung einen vierten Mikroschalter beinhaltet, der durch den Arm (3) des zweiten Gefässes (2) bei Rückkehr in seine anfängliche Ausgangsstellung betätigt wird. Dieser Mikro zieht den Zylinder (22) von den Armen der an zweiter Stelle aktivierten Gabel (19) zurück; gleichzeitig kehrt er die Verlagerung des Zylinders (2), der die Gabel betätigt (19), um; bei Rückkehr in ihre zurückgezogene Endposition, betätigt sie einen fünften Mikroschalter, der den Zugmotor (13) der Kette (10) betätigt, die sich soweit vorwärts bewegt, bis der nächste angeordnete Arm (3) die Position des erstgenannten Mikroschalters erreicht.

11. Eine Maschine gemäss der Geltendmachung 1, die sich dadurch charakterisiert, dass die Kontrollvorrichtung Sensoren beinhaltet, die durch die Eintrittsrohre, die die Gefässe halten und die Kolben der verschiedenen Zylinder (22) betätigt werden.

**Revendications**

1. Une machine destinée à modeler et à cuire des comestibles, notamment des produits alimentaires constitués d'un mélange de composants, comprenant une série de récipients (22) pour modeler et cuire les produits, ces récipients étant distribués en deux rangées symétriques parallèles et alignés transversalement deux par deux sur ces deux rangées le long desquelles ils se déplacent ; dispositif d'entraînement des récipients sur la longueur des rangées, maintenant la symétrie et, par conséquent, l'alignement transversal deux par deux des récipients sur les deux rangées ; dispositif pour faire basculer les récipients en les faisant passer de leur position de repos à une position renversée au-dessus du récipient opposé, et vice versa, décrivant ainsi une trajectoire circulaire autour d'un arbre central parallèle aux, et à égale distance des, rangées de récipients ; dispositif de contrôle pour mettre en marche et arrêter l'entraînement et également pour activer et désactiver le dispositif de bascule ; et dispositif pour chauffer les récipients ; seul un des groupes de deux récipients contient le mélange devant être modelé et cuit ; caractérisée par le fait que le dispositif d'entraînement comprend une chaîne sans fin (10) montée entre des roues dentées (11) assurant l'entraînement et le changement de directions, cette chaîne fonctionnant au moins sur une distance en avant (A), dans un plan horizontal ; des supports équidistants (4) sont fixés sur cette chaine (10), chacun d'eux supportant, suivant un arbre (5) placé dans le plan de symétrie des deux rangées de récipients (2), deux bras (3) à charnière, orientés perpendiculairement au plan de symétrie, chacun axé sur un côté de ladite chaîne (10), ces bras (3) étant coplanaires, au moins à leur extrémité, et portant les deux récipients à leur extrémité libre (2).

2. Une machine suivant la propriété 1, caractérisée par le fait que la chaîne d'entraînement (10) se situe dans le plan de symétrie des deux rangées de récipients (2).

3. Une machine suivant les propriétés 1 et 2, caractérisée par le fait que deux pistes (15) courent des deux côtés de la chaîne (10), en parallèle à celle-ci (10), et sur lesquelles reposent les bras (3) portant les récipients (2) au moyen de coussinets (9) qui leur sont fixés.

4. Une machine suivant la propriété 1, caractérisée par le fait que le dispositif de contrôle comprend un premier microprocesseur qui met à l'arrêt la chaîne d'entraînement (10), ce microprocesseur étant mis en marche consécutivement par les différents bras (3) portant les récipients (2), lorsque la chaîne (10) avance, et commandant l'arrêt du moteur (13) connecté au plateau de transmission (11) tout en actionnant un frein électronique (14) de ce moteur.

5. Une machine selon la propriété 1, caractérisée par le fait que le dispositif de bascule comprend une fourchette arquée (19) fonctionnant sous la partie avancée de la chaîne d'entraînement (10), en un point de son parcours, dans un sens transversal, et fixée par l'extrémité de sa dent centrale à un arbre parallèle à l'axe de rotation (5) des bras (3), cet arbre étant entraîné à travers une crémaillère à l'aide d'un cylindre hydraulique ou pneumatique ; la fourchette (19) se déplace suivant une trajectoire circulaire décrite autour de l'arbre en question, entre deux positions limites, l'une de retrait, où la fourchette (19) est placée sous la chaîne (10), l'extrémité des dents latérales se trouvant légèrement au-dessous des bras (3) des récipients (2) de l'un des côtés, et l'autre de bascule, où la fourchette (19) se trouve en partie au-dessus de la chaîne (10), l'extrémité des dents latérales étant placée à la hauteur des bras (3) des récipients (2) sur le côté opposé : montés sur les dents latérales de la fourchette (19), sur leur extrémité libre, deux cylindres pneumatiques ou hydrauliques (22), perpendiculaires aux bras (3) des récipients (2), et dans les positions limites mentionnées, faisant face aux logements présents sur les bras (3), dans lesquels les pistons des cylindres (24) entrent en position d'avancée.

6. Une machine suivant la propriété 4, caractérisée par le fait que les logements des bras (3) portant les récipients (2) consistent en des rainures longitudinales, une sur chaque bras (3), situées entre la charnière des bras (3) situé sur le support (4) fixé à la chaîne d'entraînement (10) et les coussinets (9) des arbres, ces rainures (8) traversant les surfaces latérales des bras (3) et sortant par l'extrémité la plus proche des coussinets (9), en bas, par la rainure (8) du bras adjacent à la position de retrait de la fourchette (19) et, en haut, par la rainure (8) du bras adjacent à la position limite penchée de la fourchette .

7. Une machine suivant les propriétés 1 et 4, caractérisée par le fait que le premier microprocesseur mentionné actionne également, et consécutivement grâce à une horloge, une électrovalve qui déclenche l'alimentation du cylindre (22) monté sur l'une des dents latérales de la fourchette (19), la position d'entrée dans la rainure (8) du bras (3) portant le récipient adjacent (2), ainsi que l'alimentation en un sens du cylindre (22) qui entraîne la fourchette (19), produisant le déplacement circulaire du bras en question (3) jusqu'à ce que le récipient (2) fixé à son extrémité soit placé en position renversée au-dessus du récipient opposé (2), le premier récipient (2) étant vide et le second contenant le produit à cuire.

8. Une machine suivant les propriétés 4 et 7, caractérisée par le fait que le dispositif de contrôle comprend également un deuxième microprocesseur fonctionnant sous l'action du bras déplacé (3) du premier récipient vide (2) dans sa position limite penchée, qui entraîne l'autre piston des dents latérales de la fourchette (19) et le fait entrer dans la rainure (8) du bras (3) du deuxième récipient (2) contenant le produit à cuire, en même temps qu'il alimente en sens contraire le cylindre (22) qui entraîne la fourchette (19), produisant le déplacement circulaire des bras (3), conjointement avec les récipients superposés (2), jusqu'à la position de départ initiale du bras (3) portant le récipient vide (2), faisant passer le contenu du deuxième récipient au premier.

**9.** Une machine suivant les propriétés 4, 7 et 8, caractérisée par le fait que le dispositif de contrôle comprend également un troisième microprocesseur qui entre en fonctionnement à la fin du mouvement circulaire des deux bras (3), entraînant le retrait du cylindre (22) des dents latérales de la fourchette (19) actionné en premier lieu, de même que l'alimentation dans le premier sens mentionné du cylindre (22) qui entraîne la fourchette, ramenant le bras du deuxième récipient (2) à sa position de repos initiale.

**10.** Une machine suivant les propriétés 4, 7, 8 et 9, caractérisée par le fait que le dispositif de contrôle comprend également un quatrième microprocesseur activé par le bras (3) du deuxième récipient (2) lorsque celui-ci retourne à sa position initiale de repos, lequel microprocesseur retire le cylindre (22) des bras de la fourchette (19) mis en marche en deuxième lieu, tout en inversant le déplacement du cylindre (22) qui entraîne la fourchette (19) ; celle-ci retourne à sa position limite de retrait, à partir de laquelle elle active un cinquième microprocesseur qui met en marche le moteur d'entraînement (13) de la chaîne (10), laquelle avance jusqu'à ce que les prochains bras alignés (3) atteignent la position mentionnée pour le premier microprocesseur.

**11.** Une machine suivant la propriété 1, caractérisée par le fait que le dispositif de contrôle comprend des détecteurs actionnés par les éléments portant les récipients et les pistons des différents cylindres (22).

EP 0 314 603 B1

_FIG. 2_

2

B

A

11

15a

11    13    14    1    10

12

15    2    16    18    3 quemadores    B

9

3

10

4

3

9

_FIG. 1_

15    2    17    16

FIG. 3

FIG. 4

EP 0 314 603 B1

FIG.5

FIG.6

FIG.7

13

FIG.8

FIG.9